# EUROPÄISCHE PATENTSCHRIFT

(11) **EP 1 042 196 B1**
(45) Veröffentlichungstag und Bekanntmachung des Hinweises auf die Patenterteilung: **12.03.2003**
(21) Anmeldenummer: 98956760.7
(22) Anmeldetag: 09.12.1998
(51) Int. Cl.: B65G 35/08

(54) **FÖRDEREINRICHTUNG UND ENTSPRECHENDES TRANSPORTMITTEL**
CONVEYOR DEVICE AND CORRESPONDING TRANSPORT MEANS
CONVOYEUR ET ELEMENT DE TRANSPORT CORRESPONDANT

(30) Priorität: 23.12.1997 CH 296497
(43) Veröffentlichungstag der Anmeldung: 11.10.2000
(73) Patentinhaber: Ferag AG, 8340 Hinwil (CH)
(72) Erfinder: EBERLE, Jürg, CH-8340 Hinwil (CH)
(74) Vertreter: Patentanwälte Schaad, Balass, Menzl & Partner AG
(86) Internationale Anmeldenummer: CH9800525
(87) Internationale Veröffentlichungsnummer: WO99033722

(56) Entgegenhaltungen:
- DE-B- 1 273 415
- US-A- 3 618 838
- US-A- 3 848 726

## Beschreibung

Die Erfindung betrifft eine Fördereinrichtung gemäss dem Oberbegriff von Anspruch 1. Die Erfindung betrifft weiter ein der Fördereinrichtung entsprechend ausgestaltetes Transportmittel gemäss dem Oberbegriff von Anspruch 8.

Aus der Druckschrift EP 0 592 918 ist eine Fördereinrichtung mit einem Strang von über Stirnflächen aneinanderliegend angetriebenen und mittels Führungsschienen gehalterten Gliedern bekannt. Eine derartige Aneinanderreihung von Gliedern ist insbesondere auf einer geradlinig verlaufenden Führungsschiene mittels der einwirkenden Schubkräfte förderbar.

Nachteilig an dieser bekannten Vorrichtung ist die Tatsache, dass die in einem gekrümmt verlaufenden Abschnitt der Führungsschiene geschobenen Glieder eine bezüglich der Führungsschiene in radialer Richtung wirkende Kraft erzeugen, die zu beträchtlichen Kraftverlusten durch Reibung führen und eine entsprechend belastbare Ausführung der Führungsschiene bedingen. Zudem entsteht an den Gliedern als auch an der Führungsschiene eine erhöhte Abnutzung. Daher ist die bekannte Fördereinrichtung für einen vorzugsweise geradlinig verlaufenden Schubbetrieb geeignet.

Aus der Druckschrift US 3,618,838 ist eine weitere Fördereinrichtung umfassend eine Vielzahl von individuell beweglichen, über Stirnseiten aneinanderliegend antreibbaren und mittels einer Führungsschiene geführten Transportmitteln bekannt, wobei in einem gekrümmt verlaufenden Abschnitt der Führungsschiene ein auf die Transportmittel wirkendes Antriebsmittel vorgesehen ist.

Nachteilig an dieser bekannten Vorrichtung ist die Tatsache, dass im gekrümmt verlaufenden Abschnitt der Führungsschiene eine radial nach Aussen wirkende Kraft auf die Transportmittel erzeugt wird, was erhöhte Reibungskräfte sowie eine erhöhte Abnutzung bewirkt. Zudem ist nicht ausgeschlossen, dass sich nacheinanderfolgende Transportmittel im gekrümmt verlaufenden Abschnitt gegenseitig berühren was eine zusätzliche Abnutzung bewirkt.

Aus der US 3,848,726 ist eine Fördereinrichtung nach dem Oberbegriff des Anspruchs 1 mit einer Vielzahl von Transportmitteln bekannt. Die Transportmittel haben Rollen und werden in einer ersten Ebene stehend und in einer darunterliegenden zweiten Ebene hängend in rollender Weise entlang einer geraden Schiene bewegt. Zum Übergang zwischen der oberen und der unteren Ebene ist ein Transportrad mit zackenförmigen Vorsprüngen vorgesehen. Diese Vorsprünge greifen zwischen jeweils zwei Transportmittel und vereinzeln diese. Die Kraft wird dabei an den Rollen der Transportmittel übertragen.

Eine Aufgabe der vorliegenden Erfindung besteht darin, eine Vorrichtung der eingangs genannten Art derart weiterzubilden, dass eine Fördereinrichtung mit durch Schubkräfte geförderten Transportmitteln geschaffen wird, welche beliebig gekrümmte und geradlinig verlaufende Strecken zu überwinden vermag und eine geringe Abnutzung aufweist.

Diese Aufgabe wird gelösst mit einer Fördereinrichtung aufweisend die Merkmale von Anspruch 1. Die Unteransprüche 2 bis 7 beziehen sich auf weitere, vorteilhafte Ausgestaltungen der Fördereinrichtung. Die Aufgabe wird weiter gelöst mit einem der Fördereinrichtung angepasst ausgestalteten Transportmittel aufweisend die Merkmale von Anspruch 8. Die Unteransprüche 9 bis 14 beziehen sich auf weitere vorteilhaft ausgestaltete Transportmittel. Die Aufgabe wird weiter gelöst mit einem system aufweisend die Merkmale von Anspruch 15.

In einer bevorzugten Ausführungsform sind die Transportmittel an der Führungsschiene gehaltert.

Ein Vorteil der erfindungsgemässen Fördereinrichtung ist darin zu sehen, dass innerhalb eines gekrümmt verlaufenden Abschnittes der Führungsschiene die ansonst druckbelastet aneinanderliegend geförderten Transportmittel gegenseitig berührungslos gehalten und gefördert werden, so dass keine, durch eine gegenseitige Berührung der Transportmittel in radialer Richtung wirkende Kraft auftritt. Zudem bewirkt das formschlüssig in das Transportmittel eingreifende Antriebsmittel eine im wesentlichen in Förderrichtung des Transportmittels wirkende Kraft. Die im gekrümmt verlaufenden Abschnitt eine Reibung beziehungsweise eine Abnutzung bewirkenden Kraftkomponenten sind daher sehr gering, weshalb das Transportmittel zudem mit in Förderrichtung geringen Kräften im gekrümmt verlaufenden Abschnitt förderbar sind.

Das im gekrümmten Schienenabschnitten auf die Transportmittel einwirkende Antriebsmittel ist insbesondere für Abschnitte geeignet, innerhalb welcher das Transportmittel eine grössere Richtungsänderung von beispielsweise 90 Grad oder 180 Grad durchläuft. Bei einer geringen Richtungsänderung von wenigen Graden, beispielsweise von 10 Grad, kann auch auf das Antriebsmittel verzichtet werden, so dass die Transportmittel einen derart gekrümmt verlaufenden Abschnitt der Führungsschiene als gegenseitig durckbelastete Körper durchlaufen.

Die erfindungsgemässe Fördereinrichtung erlaubt über Stirnseiten aneinanderliegend angetriebene, druckbelastbare Transportmittel in horizontaler, vertikaler ober beliebig dreidimensionaler Richtung verlaufend entlang einer Führungsschiene zu fördern. Zudem ist eine beliebig lange Reihe von aneinander liegenden, auf Druck belasteten, schienengeführten Transportmitteln förderbar, da die Reihe an jedem ein Antriebsmittel aufweisenden, gekrümmt verlaufenden Abschnitt der Führungsschiene entlastet wird. Das Antriebsmittel kann aktiv motorisch angetrieben sein. Die Reihe aneinander liegender Transportmittel bildet in geradlinig verlaufender Richtung eine Art Stange aus, welche auf Druck belastbar ist. Die erfindungsgemässe Fördereinrichtung erlaubt sozusagen eine "gekrümmt Stange" auszubilden, in dem die Reihe aneinander liegender Transportmittel jeweils im den geradlinig verlaufenden Schienenabschnitten eine Art Stange ausbilden, und die Transportmittel in gekrümmt verlaufenden Schienenabschnitten wohl gegenseitig berührungslos gehalten und gefördert sind, wobei die Schubkräfte von der erfindungsgemässen Fördereinrichtung trotzdem auf die aneinander liegenden Transportmittel übertragen werden, welche jeweils im dem gekrümmt verlaufenden Schienenabschnitt nachfolgenden Schienenabschnitt angeordnet sind.

Das Antriebsmittel kann beispielsweise als ein Zahnriemen oder ein Zahnrad mit gegen Aussen vorstehenden Zähnen ausgebildet sein.

Die Transportmittel sind insbesondere als schienengeführte Roll- oder Gleitkörper ausgestaltet, wobei die Grösse des Transportmittels beziehungsweise der Schiene entsprechend dem zu fördernden Objekt angepasst auszugestalten ist. Das Transportmittel kann zum Fördern von relativ kleinen Lasten, beispielsweise von Druckereiprodukten, entsprechend klein ausgestaltet sein, oder zum Fördern von relativ schweren Lasten, beispielsweise von Flaschen oder Gepäckstücken, entsprechend gross ausgestaltet sein.

Ausbildungsformen und Verwendungen einer Fördereinrichtung und eines Transportmittels sind in den gleichentags eingereichten CH-Patentanmeldungen, Nrn. 1997 2962/97, 1997 2963/97, 1997 2965/97 und entsprechenden WO99/33730, WO99/33731 und WO99/33732 der gleichen Anmelderin mit dem Titel "Schienenführbares Fördermittel und Führungsschiene zum Führen des Fördermittels", "Fördersystem" und "Fördereinrichtung" offenbart.

Die Erfindung wird nachfolgend anhand von Ausführungsbeispielen unter Bezugnahme auf die Zeichnungen erläutert. Die Figuren zeigen:
- Fig. 1: Eine Fördereinrichtung mit einer Umlenkstelle;
- Fig. 2: die Fördereinrichtung gemäss Fig. 1 mit einer reduzierten Anzahl von Transportmitteln;
- Fig. 3: eine schematische Ansicht einer Fördereinrichtung;
- Fig. 4: eine Längsansicht eines Transportmittels;
- Fig. 5: eine Aufsicht des Transportmittels gemäss Fig. 4;
- Fig. 6: eine Ansicht der Stirnseite des Transportmittels entlang der Linie A-A gemäss Fig. 4;
- Fig. 7: eine Längsansicht eines weiteren Transportmittels;
- Fig. 8: eine Ansicht der Stirnseite des weiteren Transportmittels;
- Fig. 9: eine Aufsicht des weiteren Transportmittels;
- Fig. 10: eine Mehrzahl von aneinander liegenden weiteren Transportmitteln;
- Fig. 11: eine Ansicht der Stirnseite eines weiteren Transportmittels sowie ein Schnitt durch dessen Führungsschiene;
- Fig. 12,13: eine Seitenansicht zweier weiterer Transportmittel.

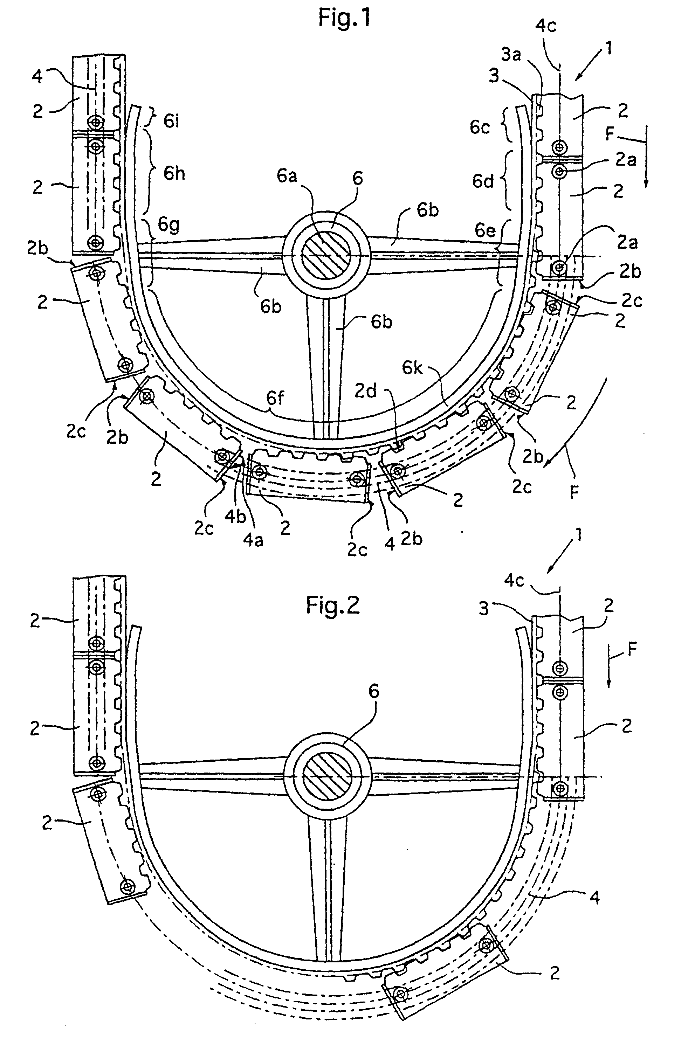

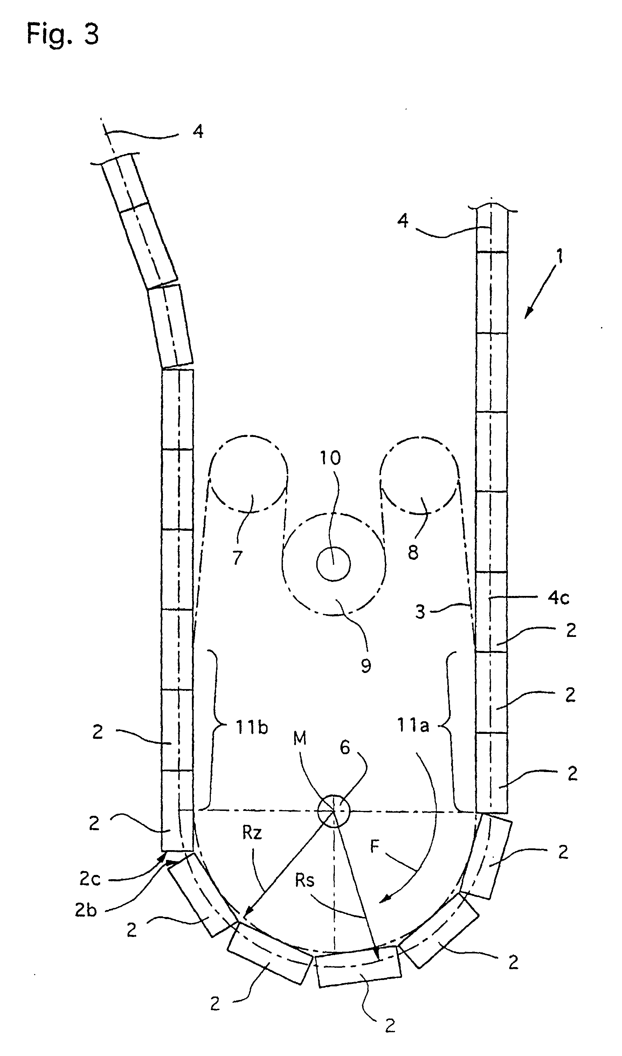

Fig. 1 zeigt eine Fördereinrichtung 1 mit einer Mehrzahl von mittels einer Führungsschiene 4 gehalterten und in einer Förderrichtung F beweglich geführten Transportmitteln 2. Die Führungsschiene 4, deren Verlauf durch die Mittellinie 4c symbolisch dargestellt ist, weist eine durch zwei Seitenwände 4a, 4b, v-förmig ausgestaltete Nut auf, in welcher die als Wagen ausgestalteten Transportmittel 2 durch seitlich vorspringende, als Gleitkörper ausgestaltete Führungsmittel 2a gehaltert und in Förderrichtung F der Führungsschiene 4 beweglich gelagert sind. Die in Fig, 1 rechtsseitig angeordnete, in einem Einlaufbereich 11a geradlinig verlaufende Führungsschiene 4 mit Mittellinie 4c mündet tangential verlaufend in einen Halbkreisbogen, wobei die Führungsschiene 4 nach einer Umlenkung um 180° wiederum tangential verlaufend einen geradlinig verlaufenden Auslaufbereich 11b ausbildet. Sowohl im Einlaufbereich 11a als auch im Auslaufbereich 11b sind die Transportmittel 2 über aneinander liegende Stirnseiten 2b, 2c in gegenseitigem Kontakt. Jedes Transportmittel 2 weist eine Eingriffsseite 2d auf, in welcher das Kraftübertragungsmittel 3 beziehungsweise das Antriebsmittel 3 formschlüssig eingreift, wobei im dargestellten Ausführungsbeispiel das Antriebsmittel 3 als ein Zahnriemen mit Zähnen 3a und einer Seele 3b ausgestaltet ist und die Eingriffsseite 2d des Transportmittels 2 entsprechend zum formschlüssigen Eingriff des Zahnriemens angepasst ausgestaltet ist. Eine Umlenkung 6 mit Lagerstelle 6a und Stützen 6b hält ein flächig ausgebildetes Stützelement 6k für den Zahnriemen 3, wobei das Stützelement 6k durch dessen Ausformung die Verlaufsrichtung des elastischen Zahnriemens bestimmt. Im dargestellten Einlaufbereich 11a sowie im dargestellten Auslaufbereich 11b befindet sich der Zahnriemen 3 bereits im Eingriff mit den Transportmitteln 2. Das Eingreifen des Zahnriemens 3 in die Transportmittel 2 wird in der Figur 3 im Detail erläutert. Der zwischen der Führungsschiene 4 und dem Stützelement 6k verlaufende Zahnriemen 3 erfährt zumindest im gekrümmt verlaufenden Abschnitt 6f eine Umlenkung um 180°, wobei die Seele 3b keine Längenänderung erfährt, der Abstand zwischen den Zähnen 3a sich in Förderrichtung F jedoch leicht vergrössert, so dass die Transportmittel 2 im gekrümmt verlaufenden Abschnitt 6f gegenseitig berührungslos durch die Zähne 3a des Antriebsmittels 3 formschlüssig gehalten und in Förderrichtung F gefördert werden. Das Stützelement 6k weist einen Einlaufabschnitt 6c auf, einen daran anschliessenden, geradlinig und parallel zur Führungsschiene 4 verlaufenden Abschnittsbereich 6d, und mündet in einen zurückweichenden Abstützabschnitt 6e, innerhalb welchem der bezüglich der Lagerstelle 6a radiale Abstand zwischen der Führungsschiene 4 und der Oberfläche des Stützelementes 6k vergrössert wird. Dem zurückweichenden Abstützabschnitt 6e nachfolgend ist der kreisbogenförmig verlaufende Abschnitt 6f angeordnet, welcher in einen anschmiegenden Abstützabschnitt 6g mündet, innerhalb welchem die Distanz zwischen der Oberfläche des Stützelementes 6k und der Führungsschiene 4 verringert wird. Danach mündet das Abstützelement 6k in einen geradlinig und parallel zur Führungsschiene 4 verlaufenden Abstützabschnitt 6h, welcher in einen Auslaufabschnitt 6i mündet.

Vorteilhafterweise weist die Führungsschiene 4 im Einlaufsowie im Auslaufbereich 11a, 11b eine tangential in den gekrümmt verlaufenden Abschnitt 6f einmündende Führungsschiene 4 auf. Um die im gekrümmt verlaufenden Abschnitt 6f wirksame Bogenhöhe des Transportmittels 2 zu kompensieren, wird der Zahnriemen 3 im zurückweichenden Abschnitt 6e gegen die Lagerstelle 6a hin zurückversetzt. Aus dem dargestellten Ausführungsbeispiel ist ersichtlich, dass der zurückweichende Abschnitt 6e, 6g der Lagerstelle 6a vorgelagert beziehungsweise oberhalb der Lagerstelle 6a beginnt, wobei die Lage des Beginnes des zurückweichenden Abschnittes 6e, 6g von der Länge des Transportmittels 2 abhängig ist.

Um die Bogenhöhe des Transportmittels 2 zu kompensieren wäre es auch möglich, auf den zurückweichenden Abstützabschnitt 6e des Zahnriemens 3 zu verzichten und die Bogenhöhe dadurch zu kompensieren, dass die Führungsschiene 4 im Einlaufbereich einen kurzen Abschnitt mit einem gegen aussen ausbuchtenden Schienenverlauf aufweist.

Das in Figur 1 dargestellte Ausführungsbeispiel weist den Vorteil auf, dass die im geradlinigen Abschnitt der Führungsschiene 4 geförderten Transportmittel 2 keine Relativbewegung zwischen den aneinander liegenden Stirnseiten 2b, 2c erfahren, und dass die Transportmittel 2 während dem Einfahren in den gekrümmt verlaufenden Abschnitt 6f unter Vermeidung einer gegenseitigen Relativbewegung der Stirnflächen 2b, 2c gegenseitig beabstandet und gegebenenfalls druckentlastet werden. Nach dem Durchlaufen des gekrümmt verlaufenden Abschnittes 6f werden die Stirnseiten 2b, 2c einander nachfolgender Transportmittel 2 unter Vermeidung einer gegenseitigen Relativbewegung oder mit einer nur relativ geringen gegenseitigen Relativbewegung in Kontakt gebracht und erfahren dabei gegebenenfalls wieder eine Druckbelastung. Daher weist die erfindungsgemässe Fördereinrichtung 1 eine geringe Reibung bzw. eine geringe Abnutzung der Transportmittel 2 auf.

Fig. 2 zeigt dieselbe Fördereinrichtung 1 gemäss Fig. 1, wobei sich im gekrümmt verlaufenden Abschnitt 6f nur zwei Transportmittel 2 befinden, wobei das eine Transportmittel 2 sowohl einen grösseren Abstand zu den vorlaufend angeordneten als auch zu den nachlaufend angeordneten Transportmitteln 2 aufweist. Auch dieses Transportmittel 2 wird sicher durch den gekrümmt verlaufenden Abschnitt 6f geführt, da das Transportmittel 2 in formschlüssigem Eingriff mit dem Antriebsmittel 3 ist und dadurch ohne eine gegenseitige Berührung und in einer genau festgelegten gegenseitigen Lage gefördert wird. So lange das Antriebsmittel 3 im Eingriff mit dem Transportmittel 2 ist, bleibt die gegenseitige Lage der Transportmittel 2 definiert und gegenseitig gesichert.

Fig. 3 zeigt eine schematische Ansicht einer Fördereinrichtung 1 mit Transportmitteln 2, einem als Zahnriemen ausgestalteten Antriebsmittel 3 und einer Führungsschiene 4 mit Mittellinie 4c. Diese Fördereinrichtung 1 könnte sowohl in vertikaler Richtung als auch in horizontaler Richtung oder in einer beliebig anderen Richtung verlaufen. Die weitere Funktion wird anhand einer vertikalen Anordnung erläutert. Die Führungsschiene 4 erfährt im untersten Abschnitt eine Umlenkung um 180°, wobei die Umlenkung 6 einen gemeinsamen Krümmungsmittelpunkt M der Führungsschiene 4 sowie des Antriebsmittels 3 bildet, wobei die Führungsschiene 4 einen Radius RS und das Antriebsmittel 3 einen bezüglich dem Radius RS geringeren Radius RZ aufweist. Der Zahnriemen 3 ist über ein nicht dargestelltes Stützelement 6k während einer Umlenkung um 180° geführt, und verläuft danach um eine Umlenkrolle 7, eine Umlenkrolle 9, welche mit einer motorischen Antriebsvorrichtung 10 aktiv angetrieben ist sowie um eine Umlenkrolle 8, um danach wieder dem nicht dargestellten Stützelement 6k zugeführt zu werden. Innerhalb des Einlaufbereiches 11a nähert sich der Zahnriemen mit gegen die Transportmittel 2 ausgerichteten Zähnen 3a unter einem möglichst spitzen Winkel, d.h. möglichst tangential zur Führungsschiene 4 verlaufend der Eingriffsseite 2d, damit die Zähne 3a formschlüssig in die Eingriffsseite 2d der Transportmittel 2 eingreifen, unter Vermeidung einer gegenseitigen Relativbewegung. Ebenso ist der Zahnriemen 3 nach dem Durchlaufen des gekrümmt verlaufenden Abschnittes 6f in einem Auslaufbereich 11b möglichst tangential bzw. unter einem sehr spitzen Winkel zur Führungsschiene 4 verlaufend geführt, um den Eingriff des Zahnes 3a möglichst unter Vermeidung einer gegenseitigen Relativbewegung aus der Eingriffsseite 2a zu lösen. Im dargestellten Ausführungsbeispiel verläuft das Antriebsmittel 3 im Einlauf- und Auslaufbereich 11a, 11b parallel zur Führungsschiene 4, und entfernt sich erst nach dem Einlauf- und Auslaufbereich 11a, 11b unter einem spitzen Winkel verlaufend zur Umlenkrolle 7,8 hin. Die Fördereinrichtung 1 bedarf nicht notwendigerweise eines aktiven Antriebes 10. Ohne einen aktiven Antrieb 10 würde der Zahnriemen 3 durch die eingangsseitig in vertikaler Richtung verlaufenden Transportmittel 2, welche eine gegen unten wirkende Kraft erzeugen, angetrieben, so dass die einzelnen Transportmittel 2, obwohl sie im Einlaufbereich 11a an deren Stirnseiten 2b, 2c jeweils eine in vertikaler Richtung verlaufende Druckkraft aufweisen, im gekrümmt verlaufenden Abschnitt 6f ohne gegenseitige Berührung und druckentlastet durch die Führungsschiene 4 geführt durch das Antriebsmittel 3 bewegt werden. Am Ende des gekrümmt verlaufenden Abschnittes 6f gelangen die Stirnseiten 2b, 2c der Transportmittel 2 wiederum in gegenseitige Wirkverbindung, so dass durch die nach oben geförderten Transportmittel 2 eine in vertikaler Richtung verlaufende Druckkraft auf die Stirnseiten 2b, 2c erzeugt wird.

Unter der Annahme, dass die Fördereinrichtung 1 gemäss Fig. 3 mit im wesentlichen in vertikaler Richtung verlaufenden Führungsschienen 4 angeordnet ist greifen die Kräfte wie folgt an den Transportmitteln 2 an: Auf der rechts angeordneten Führungsschiene 4, insbesondere im Einlaufbereich 11a, wirken die durch die Transportmittel 2 verursachten Kräfte nach unten. Zwischen den im gekrümmt verlaufenden Abschnitt 6f angeordneten Transportmitteln 2 besteht keine gegenseitige Berührung, so dass die Transportmittel 2 gegenseitig keine Kräfte übertragen. Auf der links angeordneten Führungsschiene 4, insbesondere im Auslaufbereich 11b, wirken die durch die Transportmittel 2 verursachten Kräfte ebenfalls nach unten, wobei über die sich links im Eingriff mit dem Kraftübertragungsmittel 3 befindlichen Transportmittel 2 eine gegen ober gerichtete Schubkraft erzeugt werden muss, um die Transportmittel 2 gegen ober zu fördern. Die Transportmittel 2 können durch das Kraftübertragungsmittel 3 gefördert werden ohne die Notwendigkeit eines zusätzlichen Antriebes. Die von den Transportmitteln 2 rechts nach unten wirkende Kraft wird vom Kraftübertragungsmittel 3 aufgenommen, wodurch das Kraftübertragungsmittel 3 einerseits bewegt wird, was ein Fördern der Transportmittel 2 im gekrümmt verlaufenden Abschnitt 6f ermöglicht. Zudem erzeugt das Kraftübertragungsmittel 3 im linken Bereich die nach oben wirkende Schubkraft auf die Transportmittel 2. Eine derart nur mit passiven Mitteln bewirkte Kraftübertragung ist möglich, falls die rechts nach unten wirkenden Kraft grösser ist als die im linken Bereich erforderliche, nach oben wirkende Schubkraft.

Ein Vorteil der erfindungsgemässen Fördereinrichtung 1 ist darin zu sehen, dass die erfindungsgemässe Anordnung von Führungsschiene 4 und Antriebsmittel 3 ein Fördern der Transportmittel 2 in jeder beliebigen Verlaufsrichtung der Führungsschiene 4, insbesondere in horizontaler oder vertikaler Richtung gewährleistet, und dass im gekrümmt verlaufenden Abschnitt 6f die Transportmittel 2 mit gegenseitig beabstandeten Stirnseiten 2b, 2c gefördert und umgelenkt werden.

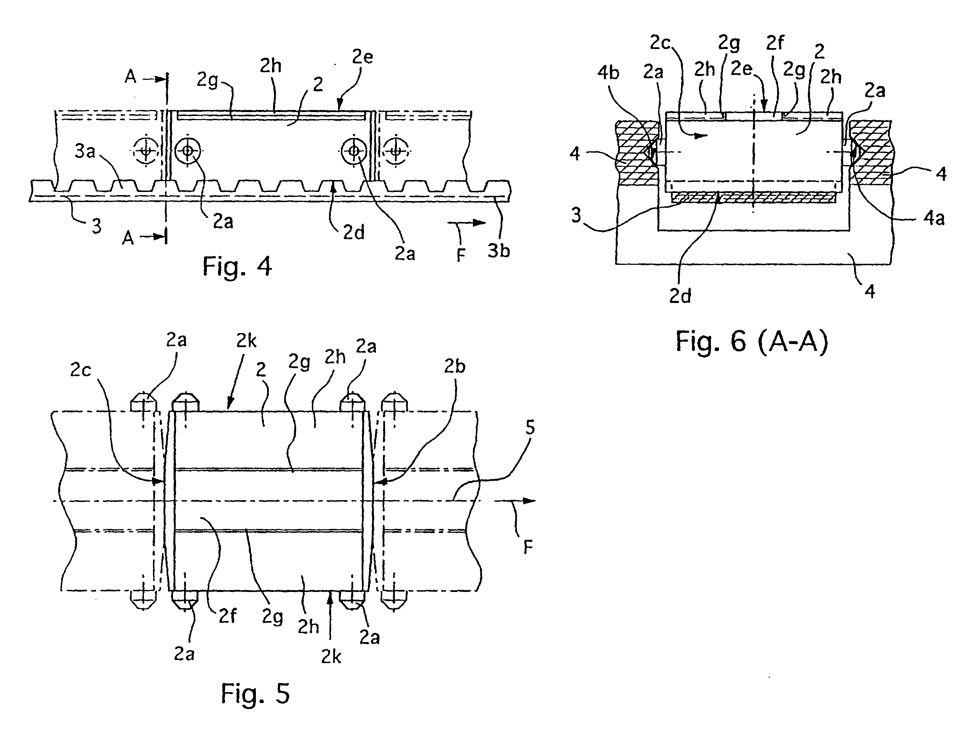

Fig. 4 zeigt eine Längsansicht eines Transportmittels 2, Fig. 5 eine Aufsicht des Transportmittels 2 gemäss Fig. 4 und Fig. 6 eine Ansicht der Stirnseite des Transportmittels 2 entlang der Linie A-A gemäss Fig. 4. Das Transportmittel 2 weist einen quaderförmig ausgestalteten Grundkörper auf mit zwei gegenüberliegend angeordneten Stirnseiten 2b, 2c, welche eine konvex verlaufende Oberfläche aufweisen. Weiter weist der Grundkörper eine zum Eingreifen des Zahnriemens 3 mit Zähnen 3a angepasst ausgestaltete Eingriffsseite 2d sowie eine diesbezüglich gegenüberliegend angeordnete, zum Fördern eines Gegenstandes bestimmte Lastseite 2e auf. Weiter weist der Grundkörper an den zwei restlichen Seiten zwei gegenüberliegend angeordnete Führungsseiten 2k mit senkrecht zur Förderrichtung F vorstehenden und in einer gemeinsamen Ebene verlaufenden Führungsmittel 2a auf, welche als Gleitkörper ausgestaltet sind, die in die v-förmige Nut 4a, 4b der Führungsschiene 4 eingreifen. Die Führungsmittel 2a sowie die v-förmige Nut 4a,4b könnten auch derart umgekehrt angeordnet sein, dass die beiden Führungsseiten 2k je eine über die ganze Seitenfläche in Förderrichtung F verlaufende, v-förmige Nut 4a,4b aufweisen, und die Führungsschiene 4 senkrecht zur Förderrichtung F verlaufende, zum Grundkörper hin vorstehende und in einer gemeinsamen Ebene verlaufende Führungsmittel 2a aufweist, welche als Gleitführung ausgestaltet fest mit der Führungsschiene 4 verbunden sind. Diese Führungsmittel 2a der Führungsschiene 4 greifen in die v-förmige Nut 4a,4b des Transportmittels 2 ein.

Das Transportmittel 2 ist durch die vier Führungsmittel 2a sicher von der Führungsschiene 4 geführt. An der Lastseite 2e können unterschiedlichst ausgestaltete Objekte mit unterschiedlichst ausgestalteten Haltemitteln gehalten und gefördert werden. Auf der Lastseite kann z.B. ein Greifer für ein Druckereiprodukt angeordnet sein. Es könnte jedoch auch eine Tragfläche für beispielsweise ein Gepäckstück angeordnet sein. Die Fördereinrichtung 1 könnte auch als ein Riemenförderer oder ein unterbrochener Riemenförderer ausgestaltet sein. Ebenso könnte die Tragfläche mit einer Bürste, mit Borsten, mit einer Klette oder mit Haken ausgestattet sein. Die Transportmittel 2 könnten auch einen Schlupfantrieb ausbilden.

Die Führungsmittel 2a sind vorzugsweise derart am Transportmittel 2 angeordnet, dass das Transportmittel 2 verkippungsfrei von der Führungsschiene 4 geführt wird, so dass alle angreifenden Kräfte, und Drehmomente auf die Führungsschiene 4 übertragen werden, so dass das Antriebsmittel 3 vorwiegend durch zum Fördern in Förderrichtung F erforderliche oder auftretende Kräfte belastet wird.

Im dargestellten Ausführungsbeispiel weist das Transportmittel 2, wie insbesondere aus Fig. 6 ersichtlich ist, zwei L-förmig ausgestaltete, ferromagnetische, metallene Teile 2g auf. Diese ferromagnetischen Teile 2g führen von der Führungsseite 2k, abgedeckt durch ein Seitenteil 2h gegen die Mitte des Transportmittels 2 hin, wobei die Teile 2g an einem Mittelteil 2f L-förmig umgelenkt sind und an die Oberfläche der Lastseite 2e zu treten. Diese vorteilhafte Ausgestaltung erlaubt, beidseitig der Führungsseite 2k ein elektromagnetisches Feld anzulegen, und durch das Leiten des magnetischen Flusses über die ferromagnetischen Teile 2g ein auf der Lastseite 2e aufliegendes, ferromagnetisches Objekt zu halten.

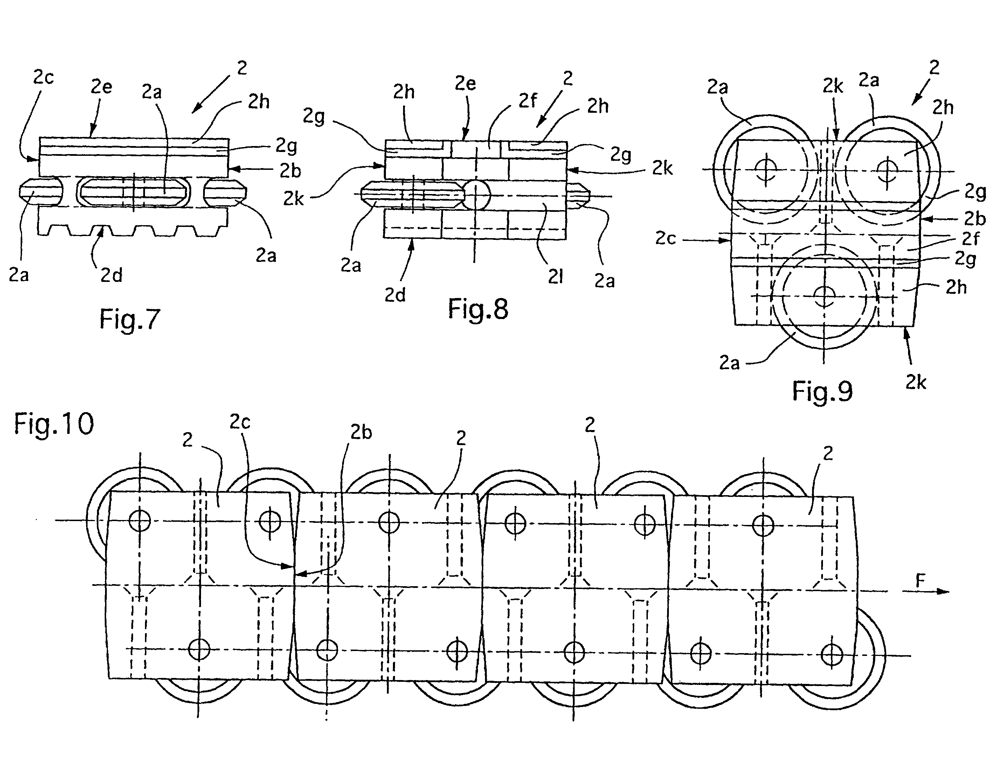

Fig. 7 zeigt eine Längenansicht eines weiteren Transportmittels 2, Fig. 8 eine stirnseitige Ansicht desselben Transportmittels 2 und Fig. 9 eine Aufsicht desselben Transportmittels 2. Dieses Transportmittel 2 weist Führungsmittel 2a auf, welche als Räder ausgestaltet sind. Die Drehzentren der drei Räder 2a bilden ein gleichschenkliges Dreieck. Der wiederum quaderförmig ausgestaltete Grundkörper mit zwei gegenüberliegend angeordneten Stirnseiten 2b, 2c, einer Eingriffsseite 2d, einer Lastseite 2e sowie zwei gegenüberliegend angeordneten Führungsseiten 2k weist im Grundkörper zur Aufnahme der Räder 2a bestimmte Ausnehmungen auf. Die Räder 2a stehen über die Führungsseite 2k vor und überragen auf derjenigen Führungsseite 2k, bei welcher zwei Räder in Förderrichtung F beabstandet angeordnet sind, auch die Stirnseiten 2b, 2c. Aus der Seitenansicht gemäss Fig. 8 ist ersichtlich, dass im Grundkörper eine Ausnehmung 21 vorgesehen ist, welche zur Aufnahme des bei einem benachbart angeordneten Transportmittel 2 über die Stirnseite 2b, 2c vorstehenden Rades 2a bestimmt ist. Aus Fig. 10 ist eine Reihe von in Förderrichtung F nebeneinander anliegend angeordneten Transportmittel 2 dargestellt, wobei jeweils zwei benachbart angeordnete Transportmittel 2 jeweils um gegenseitig 180° um die durch die Förderrichtung F gebildete Achse gedreht sind, so dass das jeweils über die Stirnseite 2b, 2c des einen Transportmittels 2 vorstehende Rad 2a in der Ausnehmung 21 des benachbart angeordneten Transportmittels 2 zu liegen kommt. Somit ist eine Reihe von Transportmitteln 2 möglich, welche über die sich gegenseitig berührenden Stirnseiten 2b, 2c durch einwirkende Druckkräfte gefördert sind. Das dargestellte Transportmittel 2 mit drei als Räder ausgestalteten Führungsmitteln 2a weist ein sehr gutes Laufverhalten in der Führungsschiene 4 auf. Auch über die Lastseite 2e angreifende Drehmomente können auf Grund des relativ grossen Abstandes der einzelnen Räder 2a sicher und ohne ein Verkanten des Transportmittels 2 zu bewirken auf die Führungsschiene 4 übertragen werden. Die konvex verlaufenden Stirnseiten 2b, 2c erlauben nicht nur ein geradliniges Fördern der Transportmittel 2 in Förderrichtung F, sondern auch leicht gekrümmt verlaufende Kurvenbahnen, wobei die Krümmung dieser Kurvenbahn um eine senkrecht zur Betrachtungsrichtung stehenden Achse verläuft. Die Transportmittel 2 werden in der Fördereinrichtung 1 gemäss Fig. 1 um eine senkrecht zur Förderrichtung F und parallel zur Betrachtungsebene verlaufende Achse umgelenkt. Um ein gegenseitiges Berühren der Transportmittel 2 im gekrümmt verlaufenden Abschnitt 6f zu vermeiden ist die Länge der Wagen in Förderrichtung F entsprechend kurz auszugestalten. Das Transportmittel 2 weist bei einer relativ kurzen Baulänge in Förderrichtung F einen relativ grossen gegenseitigen Radabstand auf. Ein Vorteil der kurzen Baulänge des Transportmittels 2 in Förderrichtung F ist darin zu sehen, dass beim Durchfahren von Kurven das in Förderrichtung F mittlere Rad 2a des Transportmittels 2 bezogen auf die beiden äusseren Räder 2a des Transportmittels 2 eine geringe abweichende Auslenkung erfährt, da der Abstand zwischen der durch die beiden äusseren Räder 2a definierten Sehne, und der Bogenhöhe, welcher das mittlere Rad 2a folgt, bei einem kurzen Transportmittel 2 gering ist.

Die Transportmittel 2 sind vorteilhafterweise derart ausgelegt, dass der Abstand der Mittellinie 4c der Führungsschiene 4, auf welcher sich auch die Führungsmittel 2a bewegen, einen relativ kleinen Abstand zur Seele 3b des beispielsweise als Zahnriemen ausgestalteten Antriebsmittels 3 aufweisen.

Das Transportmittel 2 ist bezüglich der Führungsschiene 4 immer als ein Innenläufer dargestellt. Das Transportmittel 2 könnte natürlich auch als Aussenläufer ausgestaltet sein, im dem die Führungsschiene 4 innenliegend angeordnet ist und vom aussen liegenden Transportmittel 2 zumindest teilweise umgeben ist.

Die zur Fördereinrichtung 1 angepasst ausgestalteten Transportmittel 2 können auf unterschiedlichste Art ausgestaltet sein, beispielsweise auch als Rollkörper, wie diese in der Druckschrift EP 0 387 318 A1 offenbart sind.

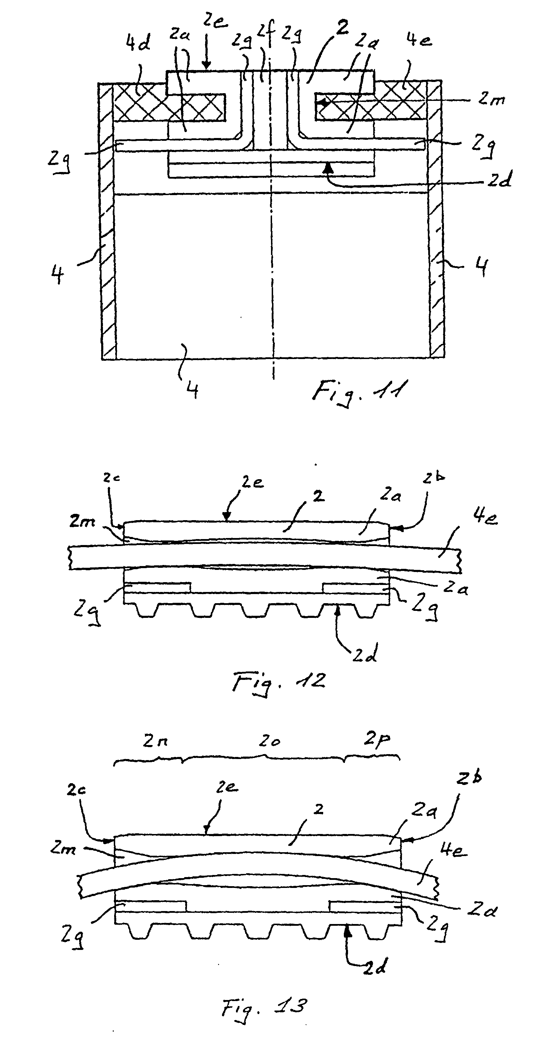

Fig. 11 zeigt eine Ansicht der Stirnseite eines weiteren Ausführungsbeispieles eines Transportmittels 2 sowie einen Schnitt durch die Führungsschiene 4. Gegenüber der in den Figuren 4, 5 und 6 dargestellten Ausführungsform weist die Schiene 4 zwei vorstehende Teilschienen 4d,4e auf, wobei das Transportmittel 2 auf jeder Seite je zwei Führungsmittel 2a aufweist, welche oben und unten auf der jeweiligen Teilschiene 4d,4e aufliegen können. Das Transportmittel 2 umfasst eine Lastseite 2e, eine Eingriffsseite 2d, ein ferromagnetisches Teil 2g sowie ein Mittelteil 2f. Die Figuren 12 und 13 zeigen eine Seitenansicht zweier Transportmittel 2, welche zum Gleiten in der in Fig. 11 dargestellten Führungsschiene 4 geeignet sind. Die Seitenansicht zeigt das Transportmittel 2 mit Eingriffsseite 2d, Lastseite 2e, ferromagnetischem Teil 2g und Stirnseiten 2b,2c. In der durch die Führungsmittel 2a ausgebildeten Nut 2m ist die Teilschiene 4e angeordnet. Die Nut 2m könnte über die gesamte Länge des Transportmittels 2 dieselbe Breite aufweisen. Um die Gleiteigenschaften in gekrümmt verlaufenden Schienenabschnitten zu verbessern weist die Nut 2m im Ausführungsbeispiel gemäss Fig. 13 einen ersten Abschnitt 2n,2p mit einer sich gegen rechts bzw. links verjüngenden Nutbreite auf, sowie einen mittleren Abschnitt 2o mit einer kreissegmentförmig verlaufenden Nutbreite. Wie aus Fig. 12 und 13 ersichtlich ist durch diese Ausgestaltung der Nut 2m das Transportmittel beim Durchfahren von Schienenabschnitten unterschiedlicher Krümmung sicher geführt.

## Patentansprüche

1. Fördereinrichtung (1) umfassend eine Vielzahl von individuell beweglichen, über Stirnseiten (2b,2c) aneinanderliegend antreibbaren und mittels einer Führungsschiene (4) geführten Transportmitteln (2), sowie ein zumindest in einem gekrümmt verlaufenden Abschnitt (6f) der Führungsschiene (4) auf die Transportmittel (2) wirkendes Antriebsmittel (3), wobei das Antriebsmittel (3) und die Transportmittel (2) formschlüssig zusammenwirken, um die ansonsten aneinanderliegend antreibbaren Transportmittel (2) im gekrümmt verlaufenden Abschnitt (6f) in einer gegenseitig berührungslosen Lage zu fördern, **dadurch gekennzeichnet, dass** die Transportmittel (2) eine zum formschlüssigen Eingriff des Antriebsmittels (3) angepasst ausgestaltete Eingriffsseite (2d) aufweisen, die in den Abschnitten (6f) zum Antriebsmittel (3) gewandt ist, in denen das Antriebsmittel (3) auf die Transportmittel (2) wirkt.

2. Fördereinrichtung (1) nach Anspruch 1, **dadurch gekennzeichnet, dass** das Antriebsmittel (3) derart bezüglich der Führungsschiene (4) verlaufend angeordnet ist, dass eine im wesentlichen in Förderrichtung (F) der Führungsschiene (4) wirkende Kraft auf das Transportmittel (2) erzeugt wird.

3. Fördereinrichtung nach einem der vorhergehenden Ansprüche, **dadurch gekennzeichnet, dass** im gekrümmt verlaufenden Abschnitt (6f) die vorstehenden Zähne (3a) sowie die Eingriffsseite (2d) der Transportmittel (2) sich gegenüberliegend und teilweise im formschlüssigen Eingriff befindlich angeordnet sind, und dass die Zähne (3a) bezüglich dem gekrümmt verlaufenden Abschnitt (6f) innenliegend und die Transportmittel (2) aussenliegend angeordnet sind.

4. Fördereinrichtung nach Anspruch 3, **dadurch gekennzeichnet, dass** der gekrümmt verlaufende Abschnitt (6f) der Führungsschiene (4) einen Krümmungsmittelpunkt (M) sowie einen konstanten Radius (RS ) aufweist, und dass die Zähne (3a) des Antriebsmittels (3) zumindest über einer Teillänge des gekrümmt verlaufenden Abschnittes (6f) eine Kurvenbahn mit demselben Krümmungsmittelpunkt (M) und einem gegenüber dem Radius (RS) der Führungsschiene (4) kleineren Radius (RZ) aufweist.

5. Fördereinrichtung nach einem der Ansprüche 3 oder 4, **dadurch gekennzeichnet, dass** das Antriebsmittel (3) als Zahnriemen ausgebildet ist, und dass im Bereich des gekrümmt verlaufenden Abschnittes (6f) ein die Kurvenbahn des Zahnriemens bestimmendes Stützelement (6k) angeordnet ist, auf welchem der Zahnriemen aufliegt.

6. Fördereinrichtung nach einem der Ansprüche 3 bis 5, **dadurch gekennzeichnet, dass** das als Zahnriemen ausgestaltete Antriebsmittel (3) der Führungsschiene (4) vor beziehungsweise nach dem gekrümmt verlaufenden - Abschnittes (6f) unter einem bezüglich der Führungsschiene (4) sehr spitzen Winkel verlaufend zugeführt beziehungsweise abgeführt ist, um ein möglichst tangentiales Eingreifen und Lösen der Zähne (3a) mit der Eingriffsseite (2d) zu bewirken.

7. Fördereinrichtung nach einem der vorhergehenden Ansprüche, **dadurch gekennzeichnet, dass** das Antriebsmittel (3) von einer motorischen Antriebsvorrichtung (10) aktiv angetrieben ist.

8. Mittels einer Führungsschiene führbares Transportmittel für eine Fördereinrichtung gemäss einem der vorhergehenden Ansprüche mit einem quaderförmig ausgestalteten Grundkörper, zwei gegenüberliegend angeordneten Stirnseiten (2b,2c), über die gleichartige Transportmittel (2) aneinanderliegend antreibbar sind, mit einer zum formschlüssigen Eingriff eines Antriebsmittels (3) angepasst ausgestalteten Eingriffsseite (2d), mit einer zur Eingriffsseite (2d) gegenüberliegend angeordneten, zum Fördern eines Gegenstandes bestimmten Lastseite (2e) und mit zwei von der Eingriffsseite (2d) verschiedenen, einander gegenüberliegend angeordneten Führungsseiten (2k), die vorstehende Führungsmittel (2a) aufweisen, wobei die Eingriffsseite (2d) in den Abschnitten (6f) zum Antriebsmittel (3) gewandt ist, in denen das Antriebsmittel (3) auf die Transportmittel (2) wirkt, und wobei das Transportmittel (2) mit dem Antriebsmittel (3) der Fördereinrichtung derart zusammenzuwirken imstande ist, dass es in einem gekrümmt verlaufenden Abschnitt der Führungsschiene relativ zu anderen gleichartigen Transportmitteln (2) berührungslos förderbar ist.

9. Transportmittel nach Anspruch 8, **dadurch gekennzeichnet, dass** zumindest drei Führungsmittel (2a) in einer gemeinsamen Ebene liegend verlaufen

10. Transportmittel nach Anspruch 8 oder 9, **dadurch gekennzeichnet, dass** das Führungsmittel (2a) als ein Gleit- oder Rollmittel ausgestaltet ist, insbesondere als ein Stift oder ein Rad.

11. Transportmittel nach einem der Ansprüche 8 bis 10, **dadurch gekennzeichnet, dass** die Führungsmittel (2a) durch drei und nicht mehr Räder ausgebildet sind, wobei die Räder in Ausnehmungen des Grundkörpers angeordnet sind und die Laufflächen zweier Räder aus der einen Führungsseite (2k) und die Lauffläche des dritten Rades aus der gegenüberliegenden Führungsseite (2k) vorstehen.

12. Transportmittel nach Anspruch 11, **dadurch gekennzeichnet, dass** die Drehzentren der drei Räder ein gleichschenkliges Dreieck ausbilden, dass die Laufflächen der zwei an der einen Führungsseite (2k) vorstehend angeordneten Räder über je eine Stirnseite (2b,2c) vorstehen, und dass der Grundkörper zur Stirnseite (2b,2c) hin eine Ausnehmung (21) aufweist, in welcher das über die Stirnseite (2b,2c) vorstehende Rad eines benachbart angeordneten Transportmittels (2) Platz findet.

13. Transportmittel nach Anspruch 12, **dadurch gekennzeichnet, dass** die Räder derart im Grundkörper angeordnet sind und der Grundkörper eine derart angeordnete Ausnehmungen (21) für das stirnseitig vorstehende Rad eines benachbarten Transportmittels (2) aufweist, dass zwei bezüglich der Förderrichtung F nebeneinander liegende und um gegenseitig 180 Grad gedreht angeordnete Transportmittel (2) sich gegenseitig berührende Stirnseiten (2b,2c) aufweisen, um dadurch insbesondere eine aneinander liegende Reihe einzelner Transportmittel (2) zu bilden.

14. Transportmittel nach Anspruch 8, **dadurch gekennzeichnet, dass** zwei Führungsmittel (2a) unter Ausbildung einer Nut (2m) beabstandet angeordnet sind, dass das Transportmittel (2) eine Förderrichtung (F) aufweist, und dass die Nut (2m) in Förderrichtung (F) eine konstante oder variierende Breite aufweist.

15. Fördersystem, insbesondere für Druckereiprodukte, umfassend eine Fördereinrichtung nach einem der Ansprüche 1 bis 7 oder ein Transportmittel gemäss einem der Ansprüche 8 bis 14.

## Claims

1. Conveying apparatus (1) comprising a multiplicity of transporting means (2) which can be moved individually, can be driven in a state in which they butt against one another via end sides (2b, 2c), and are guided by means of a guide rail (4), and also comprising a drive means (3) which acts on the transporting means (2) at least in a curved section (6f) of the guide rail (4), the drive means (3) and the transporting means (2) interacting in a form-fitting manner in order to convey the otherwise successively drivable transporting means (2) in the curved section (6f) in a position in which they do not come into contact with one another, **characterized in that** the transporting means (2) comprises an engagement side (2d) which is configured in adaption to the form-fitting engagement of the drive means (3) and which faces the drive means (3) in sections (6f) in which the drive means (3) acts on the transporting means (2).

2. Conveying apparatus (1) according to Claim 1, **characterized in that** drive means (3) is arranged in relation to the guide rail (4) such that the transporting means (2) is subjected to a force acting essentially in the conveying direction (F) of the guide rail (4).

3. Conveying apparatus according to one of the preceding claims, **characterized in that**, in the curved section (6f), the projecting teeth (3a) and the engagement side (2d) of the transporting means (2) are arranged opposite one another and are partially in form-fitting engagement, and **in that** the teeth (3a) are arranged on the inside, and the transporting means (2) are arranged on the outside, in relation to the curved section (6f).

4. Conveying apparatus according to Claim 3, **characterized in that** the curved section (6f) of the guide rail (4) has a center point of curvature (M) and a constant radius (RS), **in that**, at least over part of the length of the curved section (6f), the teeth (3a) of the drive means (3) has a curved path with the same center point of curvature (M) and a radius (RZ) which is smaller than the radius (RS) of the guide rail (4).

5. Conveying apparatus (1) according to either of Claims 3 and 4, **characterized in that** the drive means (3) is designed as a toothed belt, and **in that** arranged in the region of the curved section (6f) is a supporting element (6k) which determines the curved path of the toothed belt and on which the toothed belt rests.

6. Conveying apparatus according to one of Claims 3 to 5, **characterized in that** the drive means (3), which is configured as a toothed belt, is fed to the guide rail (4) upstream of the curved section (6f), and led away from the same downstream of the curved section (6f), at a very acute angle in relation to the guide rail (4), in order to allow the teeth (3a) and the engagement side (2d) to engage with one another, and be released from one another, as far as possible tangentially.

7. Conveying apparatus according to one of the preceding claims, **characterized in that** the drive means (3) is driven actively by a motor drive device (10).

8. Transporting means which is guidable by means of a guide rail for a conveying apparatus according to one of the preceding claims, having a cuboidal basic body, two end sides (2b, 2c) arranged opposite one another by which transporting means (2) of the same kind are successively drivable, an engagement side (2d) adapted for a drive means (3) to act thereon in a form-fitting manner, having a load side (2e) which is located opposite said engagement side (2d) and is intended for conveying an object, and having two guide sides (2k) which are different from the engagement side (2d) and are arranged opposite one another, and which have projecting guide means (2a), the engagement side (2d) facing the drive means (3) in the sections (6f) in which the drive means (3) acts on the transporting means (2), and the transporting means (2) being able to interact with the drive means (3) of the conveying apparatus such that in a curved section of the guide rail the transporting means (2) are conveyable without coming into contact in relation to other transporting means (2) of the same kind.

9. Transporting means according to claim 8, **characterized in that** at least three guide means (2a) run in a common plane.

10. Transporting means according to Claim 8 or 9, **characterized in that** the guide means (2a) is configured as a sliding or rolling means, in particular as a pin or a wheel.

11. Transporting means according to either of Claims 8 to 10, **characterized in that** the guide means (2a) are formed by three wheels and not more, the wheels being arranged in recesses of the basic body, and the running surfaces of two wheels projecting out of one guide side (2k) and the running surface of the third wheel projecting out of the opposite guide side (2k).

12. Transporting means according to Claim 11, **characterized in that** the centers of rotation of the three wheels form an isosceles triangle, **in that** the running surfaces of the two wheels which project on one guide side (2k) project beyond in each case one end side (2b, 2c), and **in that**, in the direction of the end side (2b, 2c), the basic body has a recess (21) in which that wheel of an adjacent transporting means (2) which projects beyond the end side (2b, 2c) is positioned.

13. Transporting means according to Claim 12, **characterized in that** the wheels are arranged in the basic body such that, and the basic body has a recesses (21) which is intended for the end-side-projecting wheel of an adjacent transporting means (2) and is arranged such that, two transporting means (2) which are located one beside the other in relation to the conveying direction F and are arranged in a state in which they have been rotated through 180 degrees in relation to one another have end sides (2b, 2c) which are in contact with one another, in order thus to form, in particular, an abutting row of individual transporting means (2).

14. Transporting means according to Claim 8, **characterized in that** two guide means (2a) are spaced apart to form a groove (2m), **in that** the transporting means (2) have a conveying direction (F), and **in that**, in the conveying direction (F), the groove (2m) has a constant or varying width.

15. Conveying system, in particular for printed products, comprising a conveying apparatus, according to one of Claims 1 to 7, or a transporting means according to one of Claims 8 to 14.

## Revendications

1. Convoyeur (1) comprenant une pluralité d'éléments de transport (2) déplaçables individuels, pouvant être entraînés bout à bout par le biais de leurs faces de bout (2b, 2c) et guidés au moyen d'un rail de guidage (4), ainsi qu'un élément d'entraînement (3) agissant sur les éléments de transport (2) au moins dans une section (6f) du rail de guidage (4) s'étendant en courbe, l'élément d'entraînement (3) et les éléments de transport (2) coopérant par engagement positif afin de faire avancer dans une position mutuellement sans contact dans la section (6f) s'étendant en courbe, les éléments de transport (2) pouvant par ailleurs être entraînés bout à bout, **caractérisé en ce que** les éléments de transport (2) présentent une face d'engagement (2d) conçue de manière à s'adapter en vue de l'engagement positif de l'élément d'entraînement (3), qui est tournée vers l'élément d'entraînement (3) dans les sections (6f) dans lesquelles l'élément d'entraînement (3) agit sur les éléments de transport (2).

2. Convoyeur (1) selon la revendication 1, **caractérisé en ce que** l'élément d'entraînement (3) est disposé de manière à s'étendre de telle sorte par rapport au rail de guidage (4) qu'une force agissant essentiellement dans la direction d'avance (F) du rail de guidage (4) s'exerce sur l'élément de transport (2).

3. Convoyeur selon l'une quelconque des revendications précédentes, **caractérisé en ce que** dans la section (6f) s'étendant en courbe, les dents saillantes (3a) ainsi que la face d'engagement (2d) des éléments de transport (2) sont disposées en regard et partiellement en engagement positif, et **en ce que** les dents (3a) sont disposées à l'intérieur par rapport à la section (6f) s'étendant en courbe et les éléments de transport (2) sont disposés à l'extérieur.

4. Convoyeur selon la revendication 3, **caractérisé en ce que** la section (6f) s'étendant en courbe du rail de guidage (4) présente un centre de courbure (M) ainsi qu'un rayon constant (RS), et **en ce que** les dents (3a) de l'élément d'entraînement (3) présentent au moins sur une longueur partielle de la section (6f) s'étendant en courbe une trajectoire courbe avec le même centre de courbure (M) et un rayon (RZ) plus petit que le rayon (RS) du rail de guidage (4).

5. Convoyeur selon l'une quelconque des revendications 3 ou 4, **caractérisé en ce que** l'élément d'entraînement (3) est réalisé en tant que courroie dentée, et **en ce que** dans la région de la portion (6f) s'étendant en courbe est disposé un élément de support (6k) déterminant la trajectoire courbe de la courroie dentée, sur lequel repose la courroie dentée.

6. Convoyeur selon l'une quelconque des revendications 3 à 5, **caractérisé en ce que** l'élément d'entraînement (3) du rail de guidage (4), conçu en tant que courroie dentée, est amené, respectivement éloigné, suivant un angle très aigu par rapport au rail de guidage (4) avant, respectivement après, la section (6f) s'étendant en courbe, afin d'effectuer un engagement et un désengagement aussi tangentiel que possible des dents (3a) avec la face d'engagement (2d).

7. Convoyeur selon l'une quelconque des revendications précédentes, **caractérisé en ce que** l'élément d'entraînement (3) est entraîné activement par un dispositif d'entraînement (10) à moteur.

8. Elément de transport pouvant être guidé au moyen d'un rail de guidage pour un convoyeur selon l'une quelconque des revendications précédentes, comprenant un corps de base de forme parallélépipédique, deux faces de bout opposées (2b, 2c) par le biais desquelles des éléments de transport similaires (2) peuvent être entraînés bout à bout, avec une face d'engagement (2d) conçue de manière à s'adapter en vue de l'engagement positif d'un élément d'entraînement (3), avec une face de charge (2e) disposée à l'opposé de la face d'engagement (2d), prévue pour le transport d'un objet, et avec deux faces de guidage (2k) différentes de la face d'engagement (2d) disposées à l'opposé l'une de l'autre, qui présentent des éléments de guidage saillants (2a), la face d'engagement (2d) étant tournée vers l'élément d'entraînement (3), dans les sections (6f) dans lesquelles l'élément d'entraînement (3) agit sur les éléments de transport (2), et où l'élément de transport (2) est en mesure de coopérer de telle sorte avec l'élément d'entraînement (3) du convoyeur qu'il puisse être transporté sans contact par rapport à d'autres éléments de transport similaires (2) dans une section du rail de guidage s'étendant en courbe.

9. Elément de transport selon la revendication 8, **caractérisé en ce qu'**au moins trois éléments de guidage (2a) s'étendent dans un plan commun.

10. Elément de transport selon la revendication 8 ou 9, **caractérisé en ce que** l'élément de guidage (2a) est réalisé en tant qu'élément de glissement ou de roulement, en particulier sous forme de tige ou de roue.

11. Elément de transport selon l'une quelconque des revendications 8 à 10, **caractérisé en ce que** les éléments de guidage (2a) sont réalisés par trois roues uniquement, les roues étant disposées dans des logements du corps de base et les faces de roulement de deux roues dépassant d'une face de guidage (2k) et la face de roulement de la troisième roue dépassant de la face de guidage opposée (2k).

12. Elément de transport selon la revendication 11, **caractérisé en ce que** les centres de rotation des trois roues forment un triangle équilatéral, **en ce que** les faces de roulement des deux roues disposées de manière à dépasser sur une face de guidage (2k) dépassent à chaque fois au-delà d'une face de bout (2b, 2c) et **en ce que** le corps de base présente vers la face de bout (2b, 2c) un logement (21) dans lequel la roue saillant au-delà de la face de bout (2b, 2c) d'un élément de transport adjacent (2) vient se loger.

13. Elément de transport selon la revendication 12, **caractérisé en ce que** les roues sont disposées de telle sorte dans le corps de base, et le corps de base présente, pour la roue saillant au niveau de la face de bout d'un élément de transport adjacent (2), un logement (21) disposé de telle sorte que deux éléments de transport (2) adjacents par rapport au sens de l'avance F et tournés mutuellement de 180 degrés présentent des faces de bout (2b, 2c) en contact mutuel, afin de former de ce fait notamment une rangée juxtaposée d'éléments de transport individuels (2).

14. Elément de transport selon la revendication 8, **caractérisé en ce que** deux éléments de guidage (2a) sont espacés en formant une rainure (2m), **en ce que** l'élément de transport (2) présente un sens d'avance (F), et **en ce que** la rainure (2m) présente, dans le sens d'avance (F), une largeur constante ou variable.

15. Système de transport, notamment pour des produits d'imprimerie, comprenant un convoyeur selon l'une quelconque des revendications 1 à 7 ou un élément de transport selon l'une quelconque des revendications 8 à 14.
